Europäisches Patentamt

European Patent Office

Office européen des brevets

(11) Veröffentlichungsnummer: **0 113 806**
A1

## (12) EUROPÄISCHE PATENTANMELDUNG

(21) Anmeldenummer: **83108477.7**

(22) Anmeldetag: **29.08.83**

(51) Int. Cl.³: **G 11 B 23/02**

(30) Priorität: **13.12.82 DE 3246041**

(43) Veröffentlichungstag der Anmeldung: **25.07.84**
**Patentblatt 84/30**

(84) Benannte Vertragsstaaten: **AT BE CH DE FR GB IT LI NL SE**

�[71] Anmelder: **idn inventions and development of novelties ag, Hartbertstrasse 9, CH-7002 Chur (CH)**

(72) Erfinder: **Ackeret, Peter, Alimendstrasse 18, CH-8700 Küsnacht (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

(54) **Behälter für Magnetbandkassetten.**

(57) Ein Behälter (10) für Magnetbandkassetten weist einen zur Aufnahme einer bestimmten Anzahl von Kassetten ausgebildeten Schieber (24) auf, der durch eine Federanordnung nach außen vorgespannt ist und durch eine manuell auslösbare Verriegelungsanordnung (18, 20) in der Einschubposition gehalten ist.

Bei geschlossenem Behälter sind die Bandwickel aller Kassetten durch eine Arretiereinrichtung gesperrt.

EP 0 113 806 A1

49/87-E

Behälter zur Aufbewahrung von Magnetbandkassetten
-------------------------------------------------------

Die Erfindung betrifft einen Behälter zur Aufbewahrung von Magnetbankassetten.

Solche Behälter sind in vielfältiger Form bekannt. Es gibt Einzelbehälter, die sowohl als Verkaufspackung als auch als Schutzbehälter zu Hause oder im Kraftfahrzeug geeignet sind (DE-A-22 48 408), aber auch Behälter, die von vornherein als Magazin für eine Mehrzahl von Kassetten konzipiert sind (DE-B-20 33 388).

Bei den bekannten Behältern stehen deren Außenabmessungen in einem angemessenen und jedenfalls nicht unvernünftigen Verhältnis zu den Abmessungen der unterzubringenden standardisierten Kompaktkassetten. Mit zunehmender Miniaturisierung der Kassetten jedoch würde bei entsprechender Anpassung der bekannten Bauformen entweder der Behälter so labil auszubilden sein, daß er nicht mehr handhabbar wäre, oder aber seine Abmessungen müßten in einem groteskten Mißverhältnis zur Kassettengröße stehen. Dabei ist zu berücksichtigen, daß zumindest für die Benutzung in Kraftfahrzeugen die Bandwickelnaben der Kassetten arretiert werden müssen, wenn sie sich im Behälter befinden.

Aufgabe der Erfindung ist es, einen besonders für sehr kleine Magnetbandkassetten, sogenannte Mikrokassetten, geeigneten Behälter zu schaffen, der einerseits bequem handhabbar ist und andererseits ein günstiges Verhältnis zwischen Kassetten- und Behälterabmessungen aufweist.

Diese Aufgabe wird durch die kennzeichnenden Merkmal des Patentanspruchs 1 gelöst, wobei eine Reihe dieser Merkmale von anderen bekannten Kassettenbehältern übernommen, diese Merkmale insgesamt aber in zweckmäßigster Weise kombiniert sind.

Demgemäß sind für eine bestimmte maximale Anzahl von Kassetten zumindest das Gehäuse und der Schieber gemeinsam vorgesehen (der Behälter kann aber auch weniger als diese maximale Kassettenzahl enthalten), und trotzdem werden die Kassetten in einer bequemen Entnahmeposition präsentiert, während ihre Bandwickelnaben in der Aufbewahrungsposition sämtlich gesichert sind, wofür im bevorzugten Falle ebenfalls allen im Behälter befindlichen Kassetten gemeinsame Organe vorgesehen sind.

Die Vorteile einer solchen Ausbildung ergeben sich vor allem dadurch, daß man die Kassetten dicht an dicht stapeln kann, ohne daß Zwischenwände zwischen ihnen vorzuliegen brauchen (wohl aber vorliegen können), und erst der Gesamtstapel ein einziges Transportorgan benötigt, ebenso wie ein einziges Gehäuse. Die Einsparungen an Platz und Kosten für Material, Fertigung und Montage liegen auf der Hand.

Weitere Vorteile ergeben sich aus der nachfolgenden Beschreibung von Ausführungsbeispielen, bei der auf die beigefügten Zeichnungen bezuggenommen wird.

Fig. 1    zeigt in perspektivischer Darstellung einen ersten Behälter gemäß der Erfindung im geöffneten Zustand,

Fig. 2    zeigt eine alternative Ausgestaltung eines Bauteils des Behälters nach Fig. 1 in Frontansicht,

Fig. 3    ist eine schematisierte Detailschnittdarstellung zu Fig. 2,

Fig. 4    stellt den - jetzt geschlossenen - Behälter nach Fig. 1 im Vertikalschnitt dar, etwa nach Schnittebene 4-4 der Fig. 5,

Fig. 5    ist eine Teildraufsicht auf das Innere des Behälters bei entfernt gedachter Gehäusedeckwand,

Fig. 6    ist ein Vertikalschnitt nach Linie 6-6
der Fig. 4,

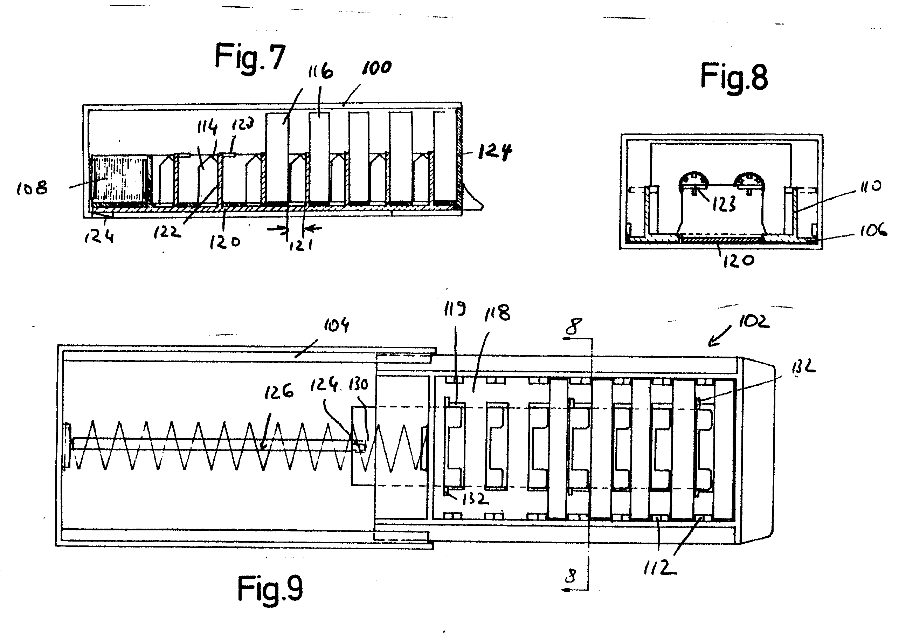

Fig. 7    zeigt im Vertikalschnitt eine zweite Ausführungsform,

Fig. 8    ist ein Vertikalschnitt in zu Fig. 7 senkrechter
Schnittebene etwa in Höhe der Ebene 8-8 in
Fig. 7,

Fig. 9    zeigt in Draufsicht, bei entfernt gedachter
Gehäusedeckwand den - im Gegensatz zu Fig. 7 -
geöffneten Behälter,

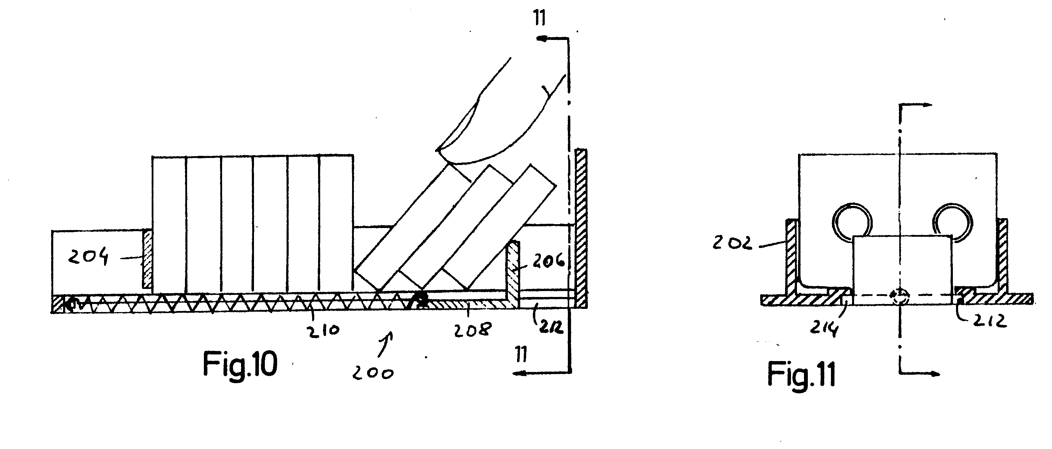

Fig. 10   stellt in weitgehend schematisierter Vertikalschnittansicht nur den Schieber einer weiteren
Ausführungsform dar,

Fig. 11   ist ein Vertikalschnitt etwa in Höhe der Ebene
11-11 der Fig. 10,

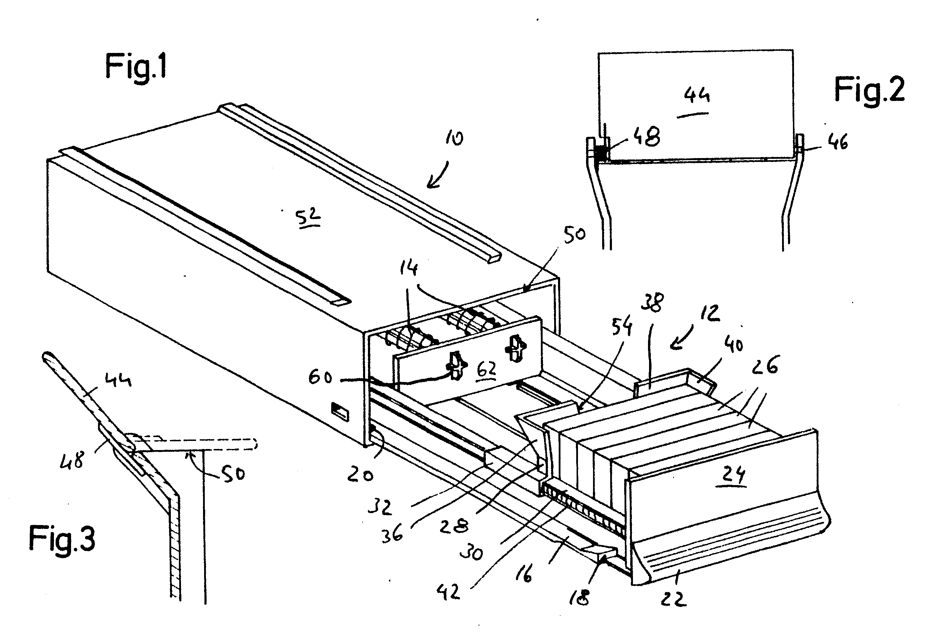

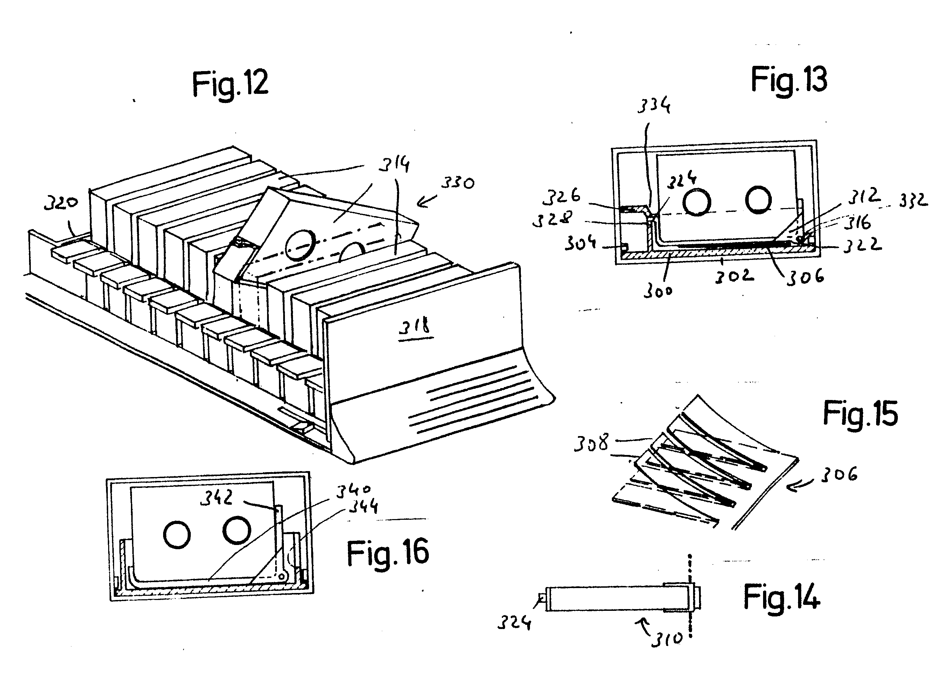

Fig. 12   zeigt perspektivisch den Schieber einer gegenüber Fig. 1-6 abgewandelten Bauart,

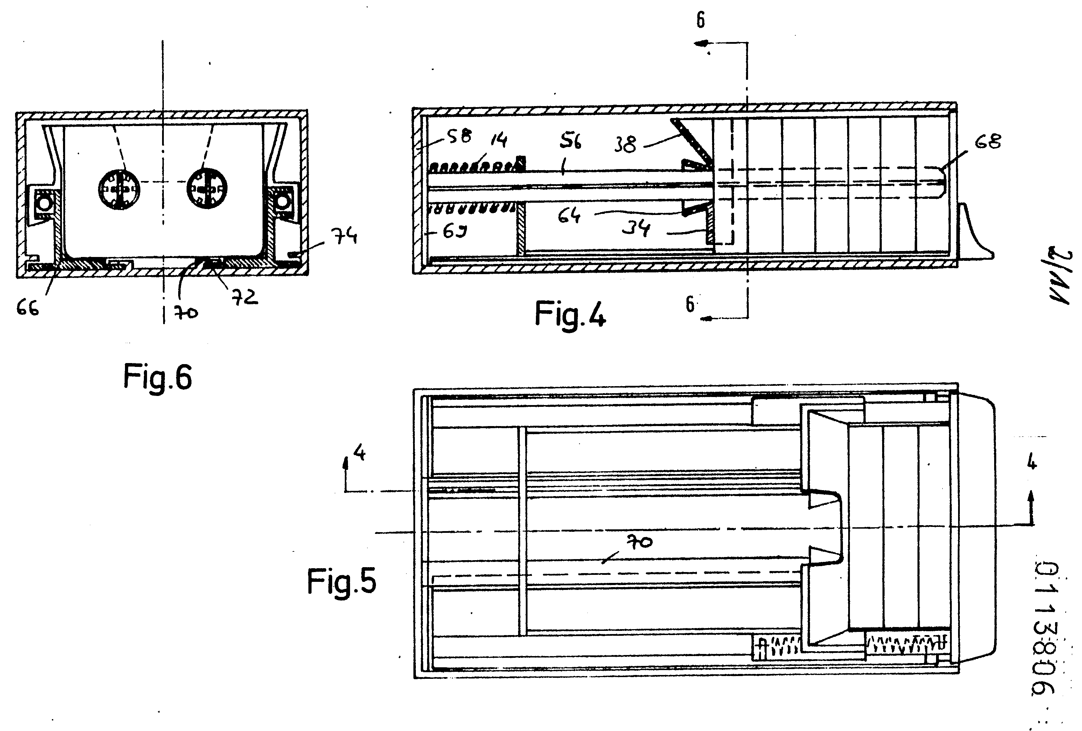

Fig. 13   ist ein Vertikalschnitt analog zu Fig. 6,

Fig. 14   zeigt in Draufsicht einen der Haltewinkel aus
dem Schieber gemäß Fig. 12,

Fig. 15   stellt perspektivisch einen Ausschnitt aus einem Federkamm dar, der in der Ausführungsform
nach Fig. 12-15 verwendet wird,

Fig. 16   zeigt in zu Fig. 13 analoger Darstellung eine
gegenüber dieser vereinfachte Ausführungsform,

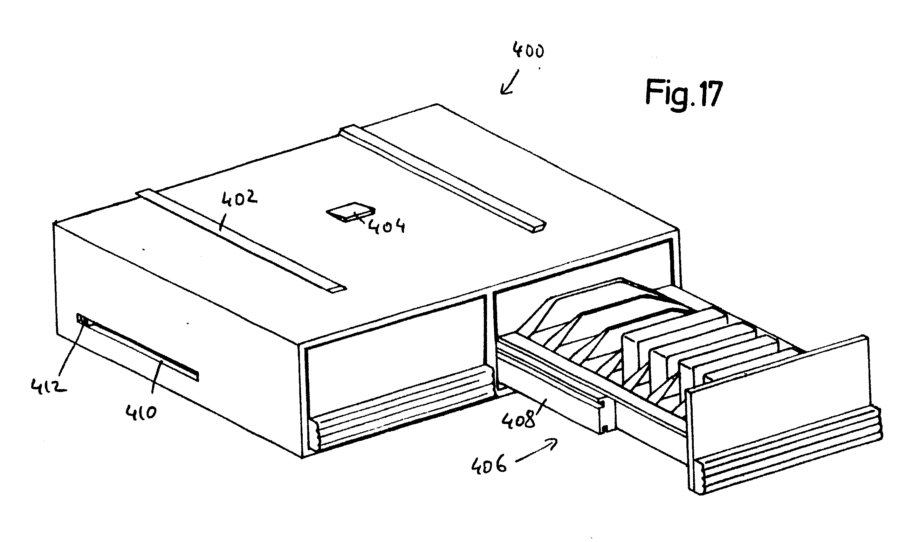

Fig. 17   zeigt perspektivisch eine weitere Ausführungsform,

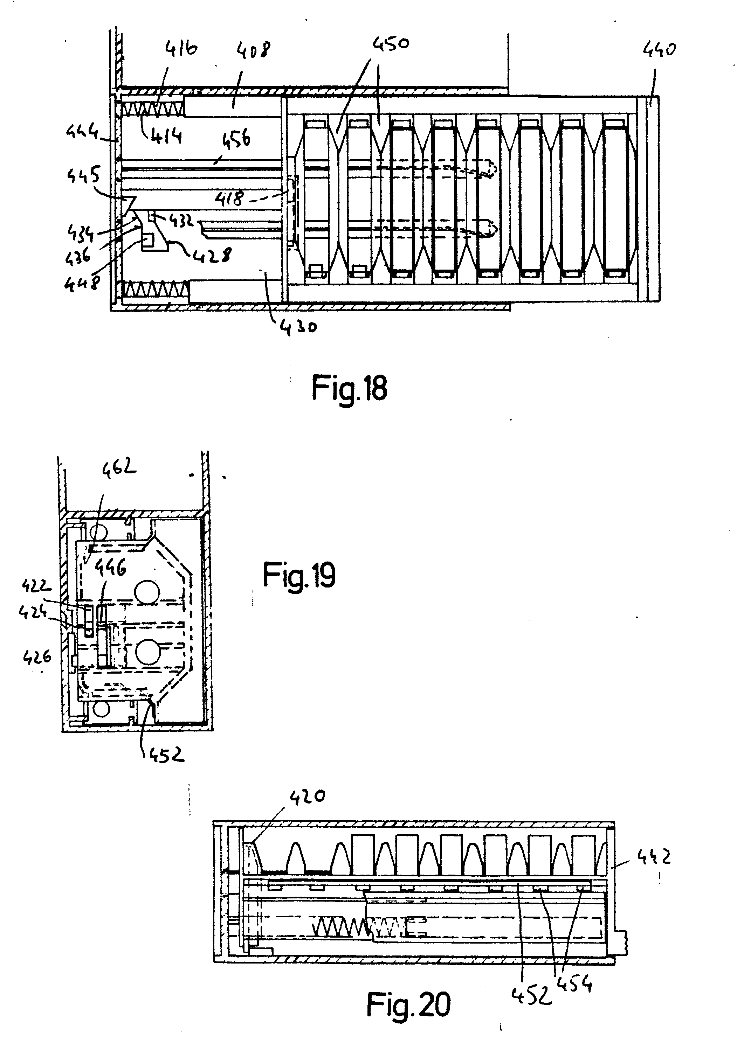

Fig. 18   ist eine aufgeschnittene Draufsicht auf eine
Hälfte des Behälters nach Fig. 17,

Fig. 19   ist ein Schnitt nach Linie 19-19 der Fig. 18,

Fig. 20   ist ein Vertikalschnitt durch den Behälter
nach Fig. 17-19,

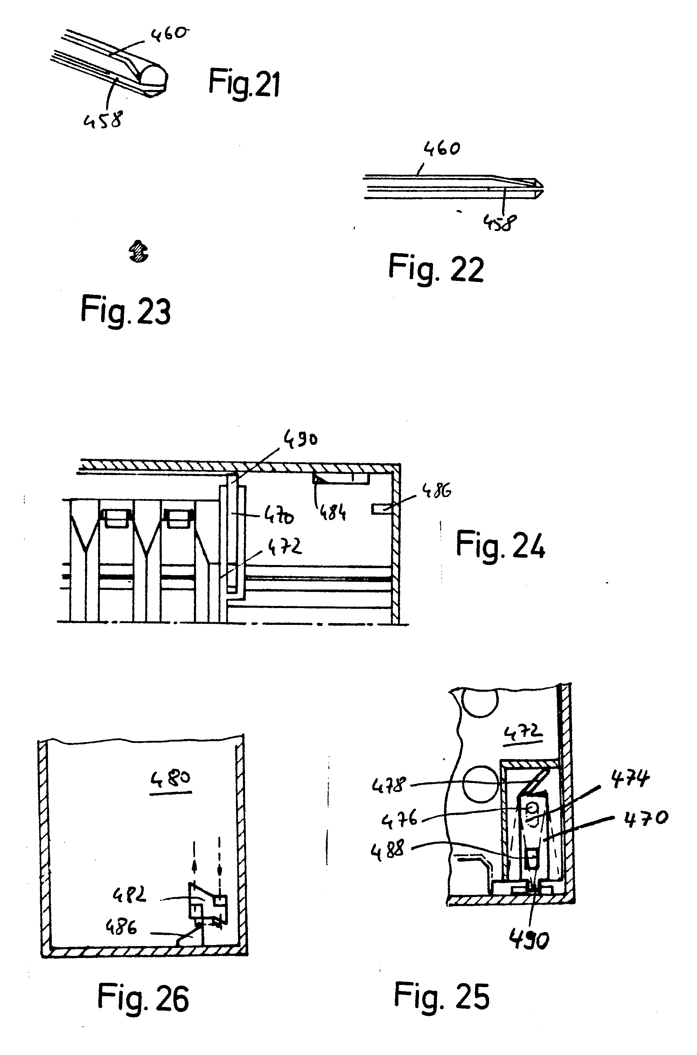

Fig. 21   zeigt perspektivisch die Spitze eines der
Dorne aus Fig. 18,

Fig. 22   zeigt diese Dornspitze in Seitenansicht,

Fig. 23   zeigt den Dorn im Querschnitt,

Fig. 24 - 26   dienen der Erläuterung des Verriegelungsmechanismus,

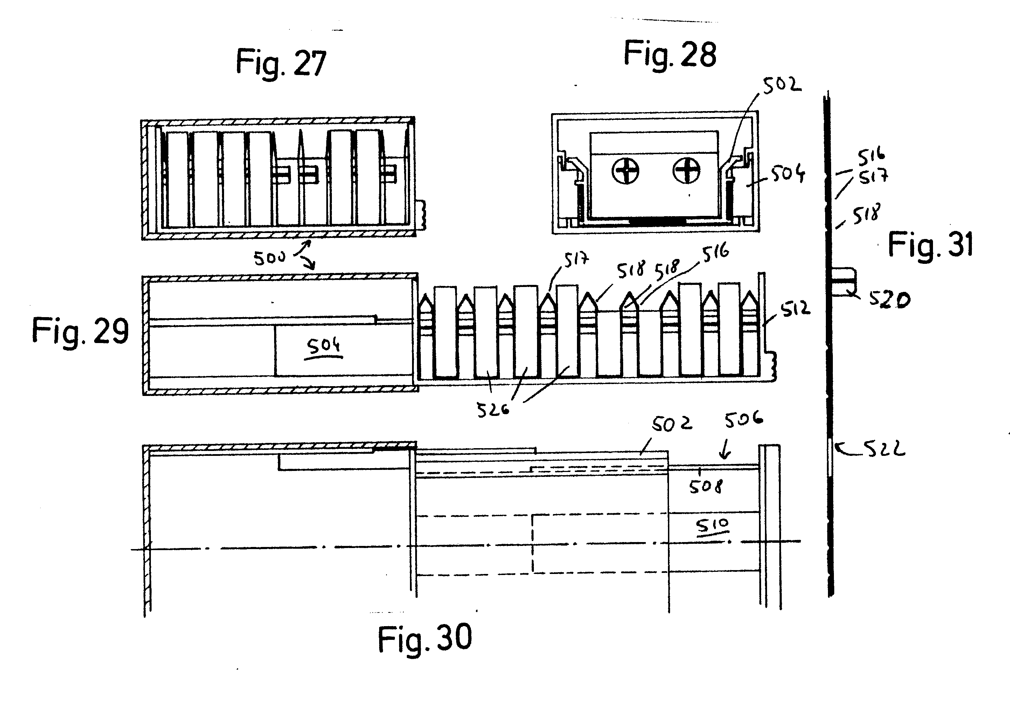

Fig. 27   stellt im schematisierten Vertikalschnitt eine weitere Ausführungsform dar,

Fig. 28   zeigt den Behälter nach Fig. 27 im Querschnitt,

Fig. 29   entspricht Fig. 27, zeigt jedoch den Behälter im geöffneten Zustand,

Fig. 30   stellt schematisch im Horizontalschnitt die Schieberführungen des Behälters nach Fig. 27 bis 29 dar,

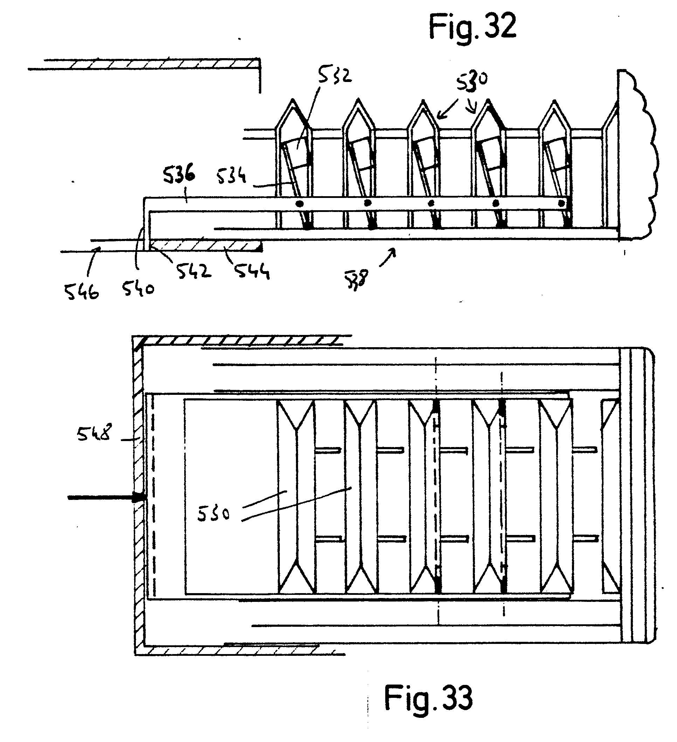

Fig. 31   zeigt eine Abwicklung eines Bauteils des Behälters nach Fig. 27-30,

Fig. 32   zeigt im schematisierten Vertikalschnitt eine weitere Ausführungsform,

Fig. 33   ist der zugehörige Horizontalschnitt,

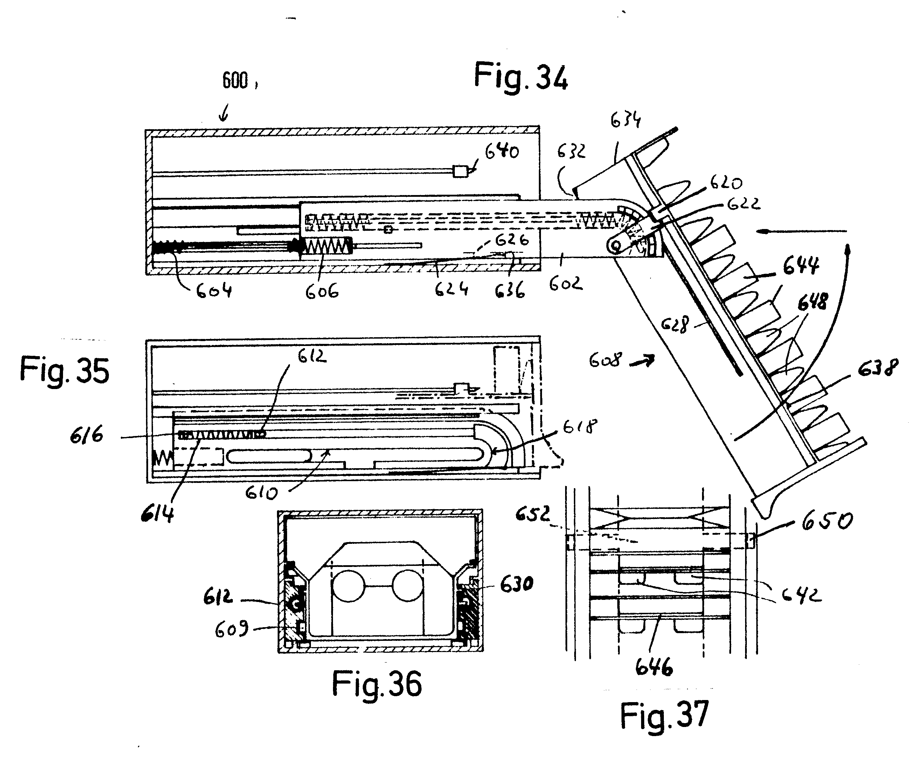

Fig. 34   stellt im schematisierten Teilvertikalschnitt einen geöffneten Behälter in einer weiteren Ausführungsform dar,

Fig. 35   entspricht Fig. 34, jedoch ist der Behälter hier geschlossen,

Fig. 36   ist eine Querschnittsdarstellung dieses Behälters, und

Fig. 37   zeigt eine Teildraufsicht.

Fig. 1 bis 6 stellen ein erstes Ausführungsbeispiel dar. - Ein Gehäuse 10 nimmt gleitbeweglich einen Schieber 12 auf, der von einem Paar Schraubenfedern 14 in die in Fig. 1 perspektivisch dargestellte Öffnungs- oder Entnahmeposition vorgespannt wird. Beim Zurückschieben des Schiebers wird eine an einem Federarm 16 angebrachte Klinke 18 durch Auflaufen auf die Falle 20 ausgelenkt und rastet dann hinter der Falle ein. Um den Schieber zu entriegeln, drückt man auf die mit dem Federarm 16 verbundene Taste 22, die sich vor der Frontplatte 24 des Schiebers erstreckt.

Hinter der Frontplatte beginnend, sind die Kassetten 26 auf ihren längeren Schmalseiten stehend - das heißt, mit dem Kopfspiegel dem Schieberboden zugewandt, - eingereiht. Weitgehend unabhängig von der Anzahl der im Schieber befindlichen Kassetten 26 werden diese eng gepackt gehalten durch eine Anpreßanordnung, bestehend aus einem Schlitten 28, der auf Seitenholmen 30 des Schiebers geführt ist, längs denen Führungshülsen 32 des Schlittens 28 gleitbeweglich sind. An die am weitesten von der Frontplatte abgewandte Kassette legt sich die Querplatte 34 des Schlittens an, die die beiden Führungshülsen 32 miteinander verbindet und nach oben durch Trichterwände 36, 38, 40 verlängert ist, von denen die Wände 36 und 40 die genannte letzte Kassette teilweise seitlich umgreifen. Diese Trichterwände ermöglichen dem Benutzer, eine entnommene Kassette wieder als letzte in den Behälter einzusetzen, indem sie längs der Trichterwandungen eingedrückt wird, wobei der Schlitten entgegen der Vorspannung von zwei Zugfedern 42, welche nahe der Frontplatte 24 einerseits und nahe dem der Frontplatte abgewandten hinteren Ende der Hülse 32 andererseits eingehangen sind, um eine Kassettendicke zurückgestoßen wird. Der von der Trichteröffnung freigegebene Spalt ist mithin etwas breiter als eine Kassettendicke.

In Fig. 2 und 3 ist eine Variante gegenüber Fig. 1 und 4-6 dargestellt. Um die Wiedereinführung einer entnommenen Kassette noch bequemer zu machen, ist an der Oberkante der Trichterwandungen 36, 40 ein Verlängerungsstück 44 mittels Zapfen 46 angelenkt, das von einer Schenkelhalsfeder 48 in seine Öffnungsposition gemäß Fig. 3 vorgespannt ist, welche durch einen Anschlag 49 definiert ist. In dieser Position ragt das Verlängerungsstück 44 über die Oberkante 50 des Gehäuses hinaus. Wird der Schieber in das Gehäuse zurückgeschoben, läuft das Verlängerungsstück 44 auf diese Kante auf und wird dabei entgegen der Vorspannung seiner Schenkelhalsfeder in eine zur Deckwandung 52 des Gehäuses parallele Stellung umgelenkt, wie gestrichelt in Fig. 3 angedeutet. In dieser Position paßt das Verlängerungsstück 44 gerade noch unter diese Deckwand 52.

In der (alternativen) Ausführungsform nach Fig. 1 und 4-6 dagegen ist die Trichterwand 40 mit einer Ausnehmung 54 versehen, damit man auch die hinterste Kassette bequem erfassen kann, obwohl ihre seitlichen Kanten von den Trichterwandungen 36 und 38 abgedeckt sind.

Die Kassetten besitzen durchgehende Öffnungen für den Eingriff der Wellen zum Antrieb der Bandwickelnaben. Um die Kassetten sicher aufzubewahren, ist es zweckmäßig, diese Bandwickelnaben zu arretieren, wenn die Kassetten im Behälter untergebracht sind; dies ist besonders wichtig für die Mitnahme im Kraftfahrzeug. Der Behälter weist zu diesem Zweck zwei Dorne 56 auf, die sich von der Gehäuserückwand 58 aus nach vorn zur Gehäuseöffnung erstrecken und zugleich die Federn 14, welche sie durchsetzen, gegen Ausknickung sichern. Die Dorne 56 erstrecken sich durch Führungsöffnungen 60 in der Schieberrückplatte 62, durch Zentriertrichter 64 des Schlittens, mittels denen eine etwaige Fehlausfluchtung der Dorne korrigiert wird, und durch die Bandwickelnaben der eingelegten Kassetten, wenn der Schieber in das Gehäuse eingeschoben ist. In der Öffnungsstellung hingegen sind alle Bandwickelnaben aller Kassetten freigegeben.

Im allgemeinen wird der Benutzer die Kassetten so einordnen, daß irgendeine logische Reihenfolge vorliegt. Wenn er dann stets die vorderste, das heißt der Frontplatte nächste, Kassette entnimmt und sie über den Trichter hinten wieder einfügt, wird die Reihenfolge nicht gestört, denn es erfolgt nur eine zyklische Umschichtung. - Dies ist ein Merkmal, das auch bei abweichender Konstruktion beibehalten werden sollte, weil es bei im übrigen lose gestapelt liegenden Kassetten die Ordnung aufrechterhält.

Die Kassetten, für die der Behälter hauptsächlich bestimmt ist - die sogenannten Mikrokassetten- haben ihre Bandwickelnaben asymmetrisch bezüglich ihrer längsten Symmetrieachse. Entsprechend asymmetrisch bezüglich der Höhenlage der Kassetten im Schieber sind deshalb auch die Dorne 56 angeordnet. Da aber nicht auszuschließen ist, daß einmal eine Kassette verkehrt herum eingeordnet wird, sind in den Längskanten des Schieberbodens Abschrägungen 66 ausgebildet, die das "richtige" Einsetzen der Kassetten nicht behindern, da diese an den komplementären Kanten abgerundet sind, eine verkehrt eingesetzte Kassette aber anheben, weil an den den Abrundungen abgewandten Ecken der Kassette solche Abrundungen nicht vorgesehen sind. Eine etwaige restliche Höhenlagendifferenz kann dadurch ausgeglichen werden, daß die betreffende Bandwickelnabe auf die Führungsschräge 68 der Dorne 56 aufläuft und dadurch um einen Restbetrag angehoben wird. - Bei anderen Kassettentypen lassen sich analoge Lösungen finden.

Aus fertigungstechnischen Gründen kann es bevorzugt sein, die Dorne vom Rest des Gehäuses getrennt herzustellen und sie dann als Unterbaugruppe(n) zu montieren, wie durch die Montageplatte 69 mit den von ihr getragenen Dornen in Fig. 4 angedeutet.

In Fig. 5 ist nur einer der Dorne 56 dargestellt, um die Führung des Schiebers in dem Gehäuse besser erkennbar zu machen, wozu auch auf die Fig. 4 und 6 zu verweisen ist:

Vom Gehäuseboden ragen Schienen 70 mit Hakenquerschnitt nach innen und oben und übergreifen abgesetzte Stufen 72 des Schieberbodens beidseits eines mittleren Schlitzes. Ähnlich ist der Schieber auch an den Außenkanten seines Bodens von Führungsleisten 74 übergriffen, von denen die eine auch Teil der oben erwähnten Falle 20 ist. Fig. 6 läßt auch die Querschnitte der Holme 30 am Schieber und der sie übergreifenden Führungshülsen des Schlittens erkennen.

Es versteht sich, daß die Ausschubbewegung des Schiebers durch hier nicht dargestellte Anschläge begrenzt ist und daß man in an sich bekannter Weise die Gehäuse so ausbilden kann, daß sie mit gleichen Gehäusen zu Blöcken stapelbar sind, etwa mittels der nur in Fig. 1 angedeuteten Schwalbenschwanzrippen auf der Gehäuseoberseite, denen komplementäre Nuten auf der Unterseite zugeordnet sind.

Es ist bevorzugt, alle Bauteile aus Kunststoff zu spritzen, mit Ausnahme der Druckfedern 14 und der Zugfedern 42.

Die Fig. 7-9 beziehen sich auf ein zweites Ausführungsbeispiel. In einem Gehäuse 100 ist wieder gleitbeweglich ein Schieber 102 aufgenommen, geführt mittels Leisten 104 an den Gehäuseseitenwänden, die die seitlichen Kanten 106 des Schieberfußes übergreifen. Der Schieber verriegelt sich beim Einschub in das Gehäuse, wobei die Vorspannung der Druckfeder 108 zu überwinden ist, die hier - wie in Fig. 1-6 - nur schematisch angedeutet ist. Die Kassetten passen jeweils einzeln in Kammern, begrenzt durch an Seitenwangen 110 des Schiebers angeformte Rippen 112, deren Oberkanten dachartige Schrägen 114 aufweisen, um das Auffinden der Kammer beim Einschieben einer Kassette 116 zu erleichtern.

Der Schieberboden 118 weist jeweils zwischen den Kassettenaufnahmekammern Ausschnitte 119 auf, durch die sie sich von einer Riegelplatte 120 her Platinen 122 erstrecken, die an ihren der Stirnwand 124 des Schiebers zugekehrten Seiten rechtwinklig abstehende Verriegelungsnocken 123 für die Bandwickelnaben der eingesetzten Kassetten aufweisen. - Die Riegelplatte 120 liegt unter dem mittleren, zu diesem Zweck unten ausgenommenen Bereich des Schieberbodens 118. Dies ist am deutlichsten in Fig. 8 erkennbar.

Die Riegelplatte 120 ist relativ zu dem Gehäuse 100 zusammen mit dem Schieber selbst aus dem Gehäuse herausbewegbar. Sie ist aber auch relativ zum Schieber um einen begrenzten Weg 121 verschieblich, nämlich denjenigen, der erforderlich ist, um die Verriegelungsnocken 123 in bzw. außer Eingriff zu bringen; die Abstände zwischen den Kammern haben die Größe dieses Weges plus die Dicke der Platinen 122, und mindestens ebenso groß ist die Breite der Ausschnitte 119 im Schieberboden, gemessen in Verschieberichtung der Teile 102 und 120.

Von Interesse sind nur die vollständige eingeschobene Position des Schiebers, in der alle Bandwickelnaben aller Kassetten verriegelt sein sollen, und die vollständig ausgeschobene Position, in der alle Kassetten frei entnehmbar sein sollen.

Die erstgenannte Position entsprechend Fig. 7 ist dadurch charakterisiert, daß sowohl der Schieber 102 als auch die Riegelplatte 120 mit ihren inneren Endkanten im wesentlichen an der Gehäuserückwand anliegen. Löst man nun durch Tastendruck die Schieberverriegelung im Gehäuse, bewegt sich jedenfalls der Schieber unter der Wirkung der Feder 108 nach außen, und spätestens nach Durchlaufen eines Weges 121 wird die Riegelplatte mitgenommen, weil die der Gehäuseöffnung zugekehrten Querkanten der Ausschnitte 119 auf die Platinen auflaufen. Dies geschieht spätestens dann, wenn eine auf der Unterseite der Riegelplatte 120 ange-

0113806

formte Klinke 125, die in einem Schlitz 126 im Gehäuseboden 128 läuft, an dessen Endkante 130 anstößt. Damit
ist zugleich der maximale Auschubhub des Schiebers festgelegt.

Schieber und Riegelplatte bilden eine vormontierbare
Baugruppe. Zu diesem Zweck weisen mindestens einige der
Platinen 122 seitlich angeformte Verankerungsnasen 132 auf,
die unter elastischer Deformation der beteiligten Bauteile
durch die jweiligen Ausschnitte 119 gedrückt werden und
beim Zurückfedern die beiden Bauteile zusammenhalten.

Es ist anzumerken, daß die Größe des Weges 121 übertrieben gezeichnet wurde, so daß der sonst zu vermutende
erhebliche Platzbedarf bei einer zweckmäßigen Konstruktion
weit weniger gravierend ist. - Alternativ zu einem gemeinsam betätigbaren Riegelsystem 120/122/123 wären auch Konstruktionen denkbar, bei denen jeder Kassettenkammer ein
individuell elastisch auslenkbares Arretiernockenpaar
zugeordnet wäre. - Was schließlich die Höhenlage der
Arretiernocken 123 angeht, so ist auf das Zuvorgesagte
zu Fig. 1-6 zu verweisen.

Zu der Ausführungsform nach Fig. 7-9 ist noch anzumerken, daß seitlich der Kassettenaufnahmekammern Platz
für Beschriftungsmöglichkeiten freibleiben kann, wie dargestellt; derartige Etikettenhalter oder dergleichen sind
aber nicht gezeichnet.

Eine weitere Ausführungsform zeigen die Fig. 10 und 11.
Der Schieber 200 (das Gehäuse ist nur schematisch angedeutet,
und es kann im wesentlichen wie in Fig. 1 dargestellt aufgebaut
sein, abgesehen von den für einen Fachmann dann ohne weiteres erkennbaren konstruktiven Änderungen) weist zwischen seinen Seitenwangen 202 eine stationär mit diesen verbundene Rückplatte 204 auf, an die die Kassetten mittels eines Andrucksystems angepreßt gehalten werden, das aber nachgibt, wenn mit dem Finger die Kassetten schräggestellt werden, wie in Fig. 1C angedeutet. Zu diesem Zweck umfaßt das Andrucksystem eine Andrückplatte 206, die von einem Führungsstück 208 abgewinkelt ist und von einer Zugfeder 210, deren eines Ende an dem Führungsstück und deren anderes Ende an dem Schieber nahe seinem hinteren (in der Fig. 10: linken) Ende einvorgespannt ist. gehangen ist, Fig. 11 läßt in schematischer Darstellung den Querschnitt erkennen; es versteht sich, daß das Andrücksystem so ausgebildet und montiert ist, daß der Schieberlängsschlitz 212 die Seitenkanten 214 des Führungsstücks auch auf der Unterseite umgreift. - Diese Ausführungsform ist sehr ähnlich der nach Fig. 1, und selbstverständlich kann das dort gezeigte und erläuterte System der Bandwickelnabenarretierung hier ebenfalls Verwendung finden.

Dasselbe gilt für die Ausführungsformen nach Fig. 12 bis 15 und 16.

Gemäß Fig. 12-15 ist in dem Schieber, dessen Bodenplatte 300 zwischen dem Gehäuseboden 302 und an die Gehäuseseiten angeformten Stegen 304 gleitbeweglich geführt ist, ein kammartiges Federblech 306 eingelegt, dessen entspannte Konfiguration in Fig. 15 mit durchgehenden Linien gezeichnet ist, während die vorgespannte Position der Federzinken 308 in dieser Figur gestrichelt angedeutet wurde. Diese Position entspricht der Darstellung in Fig. 13. Jeder Federzinke 308 ist ein Kassettenhaltewinkel 310 zugeordnet, der die Kassette an ihren zwei kürzeren Schmalseiten umfaßt und durch Versteifungsdreiecke 312 auch die Lage der Kassette 314 in Richtung ihrer Bandwickelachsen festlegt. Sämtliche Haltewinkel 310 weisen eine Lagerbohrung 316 auf, die auf eine gemeinsame, in der Frontplatte 318 und der Rückplatte 320 - die hier starr mit dem Schieber verbunden ist - verankerte und als Welle dienende Drahtspeiche 322 aufgefädelt sind. Auf diese Weise wird der Platz zwischen Front- und Rückplatte des Schiebers vollständig ausgenutzt.

In der Aufbewahrungsposition nehmen die Haltewinkel die in Fig. 13 dargestellte Lage ein, da eine Nase 324 schräg gegenüber der Lagerbohrung 316 in einer Falle 328 festgehalten ist, ausgebildet in einem Tastenhebel 326. Die einzelnen Tastenhebel sind mit der Schieberbodenplatte 300 einstückig ausgebildet. Drückt man auf das freie, abgewinkelte Ende des Tastenhebels 326, rastet die Nase 324 aus, und die diesem Haltewinkel zugeordnete Federzinke verschwenkt den Haltewinkel in die bei 330 in Fig. 12 angedeutete Position, wobei der Schwenkwinkel durch einen Anschlag 332 begrenzt wird, der auf die Schieberbodenplatte aufläuft. Bei Wiedereindrücken des Haltewinkels rastet dieser wieder in der Falle 328 ein, indem der Tastenhebel 326 durch Auflaufen der Nase 324 auf die Schrägfläche 334 des Tastenhebels beiseitegedrückt wird.

In Fig. 16 ist eine ähnliche Konstruktion gezeigt wie in Fig. 12-15, jedoch erfolgt hier das Verschwenken des Haltewinkels 340 manuell, also nicht durch Federkraft, wobei der Schwenkwinkel durch Auftreffen des Haltewinkelarmes 342 auf eine hochstehende Anschlagschiene 344 des Schieberbodens 300 begrenzt ist.

Die Ausführungsform nach Fig. 17-26 unterscheidet sich in mehrfacher Hinsicht von den zuvor beschriebenen. Sie ist, wie auch die weiteren beschriebenen Ausführungsbeispiele, besonders zum Mitführen oder Einbauen in Kraftfahrzeugen bestimmt.

In einem Doppelgehäuse 400, dessen Außenabmessungen beispielsweise einem gegebenen Rastermaß entsprechen, das aber mittels Rippen 402 und Haken 404 auch mit anderen gleichartigen Gehäusen stapelbar ist, sind gleitbeweglich zwei Schieber 406 aufgenommen, die untereinander identisch sind, so daß nur einer im Detail beschrieben zu werden braucht.

Jeder Schieber ist mittels einer Doppelführung, die teleskopartig ausgebildet ist, mit dem Gehäuse verbunden. Gleitverschieblich relativ zum Gehäuse sind seitliche Schienen 408, deren Auszugslänge mittels eines in einem Gehäuseschlitz 410 gleitenden Anschlags 412 begrenzt ist, und in diesen Schienen ist der jeweilige Schieber selbst gleitbeweglich aufgenommen. Auf den Schieber wirken zwei Druckfedern 414, abgestützt auf Bolzen 416, welche sich beide durch die Schienen 408 erstrecken. Die Querschnittsformen der jeweils zusammenwirkenden Führungen ist in Fig. 19 deutlich erkennbar.

Im eingeschobenen Zustand verriegelt sich der Schieber im Gehäuse. Hierzu dient ein kulissengesteuerter Riegel 418, der quer zur Ausschubrichtung des Schiebers gleitend in einem Käfig 420 ist; außerdem ist der Riegel um einen in einem Langloch 422 geführten Zapfen 424 schwenkbar. Beim Einschieben des Schiebers aus der in Fig. 17 oder 18 dargestellten Position in das Gehäuse läuft der Riegelfortsatz 426 auf eine schräg verlaufende Kante 428 einer am Gehäuseboden 430 angebrachten Kulisse und wird von dieser – gleichgültig, aus welcher Ausgangsposition – nach oben (in Fig. 18) gedrückt, bis er von einer Rampe 432 quer zu der Verschieberichtung federnd ausgelenkt wird und über die Kulisse weg gleitet. Beim Loslassen des Schiebers drücken die Federn 414 den Schieber wieder nach außen. Dabei läuft der Riegelfortsatz längs einer weiteren schrägen Kante 434 zurück, bis er an der Anschlagkante 436 hängenbleibt: Der Schieber ist im Gehäuse verriegelt. Drückt man nun erneut auf den Schieber, etwa sie Tastleiste 440 auf der Außenseite seiner Stirnfront 442, so dringt ein an der Gehäuserückwand 444 angebrachter Steuernocken 445 gegen eine am Riegel vorgesehene Steuerkante 446, so daß der Riegel nach unten (in Fig. 18) verlagert wird und über die Rampe 448 federnd ausgelöst wird. Wie man erkennen kann, lassen sich alle für diesen Typ von Verriegelung nötigen Bauteile einfach im Spritzgußverfahren aus Kunststoff fertigen beziehungsweise bei der Fertigung von Schieber und Gehäuse gleich mit anspritzen, so daß die Mehrkosten durch das zusätzliche Teil, nämlich den Riegel, nur gering sind.

An den Schieber sind dachartig auslaufende Trennwände 450 zur Ausbildung einzelner Aufnahmefächer angeformt, und ein kammartiges Blechstück 452 mit einzelnen, jeweils in ein Fach ragenden Federzinken 454 verhindert ein Rütteln der eingesetzten Kassetten.

Zum Blockieren der Bandwickelnaben der einzelnen Kassetten sind ähnlich wie in Fig. 1 zwei Dorne 456 vorgesehen. Wenn ein mit Kassetten besetzter Schieber schnell eingeschoben wird, besteht die Gefahr, daß die Naben der einen oder anderen Kassette gerade so ungünstig relativ zu den blockierenden Dornrippen stehen, daß sie auf diese auflaufen. Es ist deshalb dafür Sorge getragen, daß sich trotzdem der Schieber mühelos schließen läßt und gleichwohl die Kassetten - und auch nicht die Dorne - beschädigt werden.

Wie Fig. 21-23 erkennen lassen, ist jedes Dornende mit einem Querschlitz 458 versehen und die Blockierrippe 460 verläuft im Bereich dieses Schlitzes längs einer sehr steilen Schraubenlinie. Trifft eine Kassettennabe mit ihrem Innenstern auf das Rippenende, wird das Dornende im Bereich des Schlitzes zusammengedrückt, und beim weiteren Einschub gleitet der Nabenstern über den zur Bewegungsrichtung schräg stehenden Rippenabschnitt, bis er freikommt. Es hat sich gezeigt, daß dank dieser Konstruktion eine einwandfreie Funktion unter allen vorkommenden Bedingungen gewährleistet ist.

Bei den standardisierten Kassetten leigen die Zentren der Bandwickelnaben nicht in einer Symmetrieebene des Kassettenkörpers, sondern etwas seitlich versetzt. Stellt also ein Benutzer eine Kassette "falsch herum" in eines der Aufnahmefächer, besteht die Gefahr, daß die Dorne auf den Kassettenkörper auftreffen, anstatt die Wickelnaben zu durchsetzen. Aus diesem Grunde sind am Boden der Fächer seitliche Abrundungen 462 vorgesehen, komplementär zu entsprechenden Abrundungen an der entsprechenden Kante einer "richtig" eingesetzten Kassette. Deren gegenüberliegende Kante dagegen hat keine solchen Abrundungen, und diese Kanten sitzen bei verkehrtem Einschub auf den Fachabrundungen auf mit dem Ergebnis, daß jetzt die sonst zu tief liegenden Nabenzentren soweit gehoben werden, daß die Dorne eindringen können.

Eine alternative Ausbildung des Verriegelungsmechanismus ist in Figuren 24-26 dargestellt. Der Riegel 470 ist in der Schieberrückwand 472 beidseitig abgestützt; diese weist ein Langloch 474 auf, mittels dem er längs eines Zapfens 476 verschieblich und um diesen Zapfen schwenkbar ist, gegen die Vorspannung einer angeformten Feder 478. An der Seitenwand 480 des Gehäuses ist eine Kulisse 482 entsprechend der Kulisse in Fig. 18; die Rampe 484 ist in Fig. 24 deutlich erkennbar. Der Steuernocken 486, an die Rückwand des Gehäuses angeformt, greift beim Entriegeln in einen Durchbruch 488 des Riegels 470 und führt ihn in die Auslöseposition. Der vom Verriegelungsfortsatz 490 durchlaufene Weg ist gestrichelt in Fig. 26 angedeutet.

Figuren 27-31 zeigen eine besonders platzsparende Ausführungsform. Der im Gehäuse 500 gleitbeweglich geführte Schieber besteht aus einem Innenteil 502, mittels Schienen 504 am Gehäuse geführt, und einem Außenteil 506, das mit zwei seitlichen Laschen 508 und einer Bodenlasche 510 in entsprechenden Falzen des Innenteils geführt ist. Die Laschen sind durch die Stirnfront 512 miteinander verbunden. In den demgemäß selbst teleskopartig ausziehbaren Schieber ist ein im Zickzack gefalteter Streifen 514 aus Kunststoff mit angeformten Gelenkstellen bei 516, 517 und 518 eingesetzt, an den Bandwickel-Sperrnocken 520 angeformt sind, denen Durchbrüche 522 derart zugeorndet sind, daß im montierten Zustand jeweils ein Nocken 520 vor einem Durchbruch 522 steht. Eine Teilabwicklung des Einsatzstückes ist in Fig. 31 in vergrößertem Maßstab dargestellt.

Bei ausgezogenem Schieber (Fig. 29) verschwinden die Sperrnocken in den Innenräumen der Trennwände, jeweils gebildet von aufeinanderfolgenden Abschnitten 524 des Einsatzstückes. Wird der Schieber eingeschoben und dabei komprimiert (Fig. 27), so werden diese Trennwände zusammengedrückt, die Nocken 520 treten durch die Durchbrüche 522 und können in die Bandwickelnaben der eingesetzten Kassetten 526 eindringen. Das Schieberinnenteil 502 weist noch angeformte Schrägen auf, die das Einführen der Kassetten erleichtern. Die auch hier vorgesehenen Ausschiebefedern und der Verriegelungsmechanismus sind nicht erneut dargestellt; sie entsprechen der Ausbildung bei dem zuvor beschriebenen Ausführungsbeispiel.

In der Ausführungsform nach Fig. 32 und 33 sind die Trennwände 530 starr an den Schieber angeformt. In jeder Trennwand sitzt ein Sperrnockenpaar 532 auf einem Hebelarm 534, und jeder Hebelarm ist seitlich an eine Steuerstange 536 angelenkt. Im ausgezogenen Zustand des Schiebers 538 läuft ein Anschlagarm 540 der Steuerstange auf eine Endkante 542 eines im Gehäuseboden 544 vorgesehenen Schlitzes 546, wodurch die Nocken in Entsperrstellung verschwenkt werden (Fig. 32). Beim Einschub trifft die Steuerstange auf die Gehäuserückwand 548 und drückt die Sperrnocken in Sperrposition. Wie zuvor, erleichtern die Dachschrägen der Trennwände das Einsetzen der Kassetten. Ausschubfedern und Verriegelungsmechanismus entsprechen den vorher beschriebenen Beispielen und sind daher weder gezeichnet noch beschrieben. – Die abgerundete Schieberfrontwand deckt die Gehäusekanten ab, wenn der Schieber eingeschoben ist. Fig. 34-37 stellen eine Ausführungsform dar, die dann bevorzugt ist, wenn der Behälter beispielsweise aus Platzgründen in einem Kraftfahrzeug nur "stehend" untergebracht werden kann. Die Kassetten sollen aber gleichwohl dem Benutzer bequem präsentiert werden.

Im Gehäuse 600 sind zwei seitliche Schienen 602 gleitbeweglich geführt. Sie stehen unter Vorspannung durch je eine Druckfeder 604, die bis in eine Ausnehmung 606 der Schiene reicht und deshalb auch im geöffneten Zustand noch sicher geführt ist. Gleitbeweglich längs der Schienen ist ein Kassettenkasten 608 vorgesehen. Er greift einerseits mit angeformten Zapfen 609 von innen in eine Führungsnut 610 der Schienen, andererseits mit einem angeformten Fortsatz 612 in eine weitere innere Führungsnut 614 der Schienen, in welcher auch eine weitere Druckfeder 616 angeordnet ist. Diese stützt sich hinten an der Schiene ab und drückt vorn gegen den als Anschlag dienenden Fortsatz 612. Diese zweite Führungsnut 614 läuft vorn in einen Kreisbogen 618 aus, zentriert auf den jeweiligen Führungszapfen des Kastens, wenn dieser am Ende seiner Führungsnut 610 angekommen ist. Wird der Behälter geöffnet, so schieben die Federn 604 die Schienen 602 nach außen, und die Federn 616 schieben den Kasten 608 ebenfalls nach außen, bis dessen Zapfen am Ende ihrer Führungsnut anschlagen; danach verschwenken die weiterhin vorgespannten Federn 616 den Kasten um dieses Zentrum, wobei der Schwenkwinkel durch einen am Kasten angeformten Anschlag 620 begrenzt wird, der auf einen Anschlaghebel 622 aufläuft. Dieser ist in seiner Winkellage ratschenartig verstellbar auf der Außenseite der Schienen angebracht.

In der Öffnungsposition sind die Schienen mittels einer am Gehäuseboden angebrachten Blattfeder 624 verriegelt, die in eine entsprechende Aussparung 626 der Schiene greift. Die Entriegelung erfolgt, wenn der Kasten in Parallel-Position zurückgeschwenkt und ein kurzes Stück eingeschoben worden ist, wobei auch zwei am Kasten 608 außen angebrachte Führungsrippen 628 bereits in entsprechende Nuten 630 der Schienen eingegriffen haben. Die Endschrägen 632 am unteren Ende der Kastenrückwand 634 laufen dann auf die Auslöseschräge 636 der Federn 624 auf und entriegeln die Schienen. Wird nun der Kasten ganz eingeschoben, trifft eine an ihn angeformte Nase 638 auf eine an das Gehäuse angeformte Klinke 640, so daß der Kasten nach unten entgegen der Vorspannung durch die Blattfedern 624 verschwenkt wird, bis schließlich die Nase hinter der Klinke einrastet.

Die Nocken 642 zum Arretieren der Bandwickelnaben der Kassetten 644 sitzen auf Trägern 646, welche innerhalb der Trennwände 648 verschieblich sind. Sie werden betätigt durch Auflaufen von Anschlaglappen 650, welche von einer die Träger 646 verbindenden Bodenplatte 652 nach außen ragen, auf entsprechende Gegenanschläge im Gehäuse, ähnlich wie oben zu Fig. 32 und 33 oder auch Fig. 9 beschrieben.

Ansprüche

1)   Behälter für Magnetbandkassetten, gekennzeichnet durch die Kombination der folgenden Merkmale:
- der Behälter umfaßt ein Gehäuse und einen in ihm gleitbeweglich geführten Schieber,
- der Schieber ist zur Aufnahme einer bestimmten Anzahl von Kassetten ausgebildet, die mit ihren Breitseiten einander zugewandt und mit einer ihrer Schmalseiten auf dem Schieberboden abgestützt sind,
- es ist eine Federanordnung vorgesehen, die den Schieber nach außen vorspannt,
- es ist eine Verriegelungsanordnung für die Einschubposition des Schiebers vorgesehen, die manuell auslösbar ist,
- die Bandwickelnaben aller in einem in das Gehäuse eingeschobenen Schieber befindlichen Kassetten sind arretiert.

2)   Behälter nach Anspruch 1, dadurch gekennzeichnet, daß der Schieber an der Innenseite von Gehäuseseitenwänden geführt ist.

3)   Behälter nach Anspruch 1, dadurch gekennzeichnet, daß der Schieber am Gehäuseboden geführt ist.

4)   Behälter nach Anspruch 1, dadurch gekennzeichnet, daß der Schieber in Schienen geführt ist, die ihrerseits im Gehäuse gleitbeweglich geführt sind.

5) Behälter nach Anspruch 4, dadurch gekennzeichnet, daß der Schieber in seiner ausgeschobenen Position relativ zu den Schienen verschwenkbar ist.

6) Behälter nach Anspruch 5, dadurch gekennzeichnet, daß der zwangsgesteuert verschwenkt wird.

7) Behälter nach Anspruch 6, dadurch gekennzeichnet, daß der Schieber durch eine Federanordnung in die verschwenkte Position vorgespannt ist.

8) Behälter nach Anspruch 5, dadurch gekennzeichnet, daß ein verstellbarer Anschlag zum Begrenzen des Verschwenkwinkels vorgesehen ist.

9) Behälter nach Anspruch 1, dadurch gekennzeichnet, daß ein gemeinsames Gehäuse für eine Mehrzahl von Schiebern vorgesehen ist.

10) Behälter nach Anspruch 1, dadurch gekennzeichnet, daß die Federanordnung eine einzige Druckfeder umfaßt, die zwischen einer Gehäuserückwand und einer Schieberrückwand eingespannt ist.

11) Behälter nach Anspruch 1, dadurch gekennzeichnet, daß jedem Schieber ein Paar von Druckfedern zugeordnet ist, die zueinander parallelwirkend angeordnet sind und zwischen einer Gehäuserückwand und dem Schieber eingespannt sind.

12) Behälter nach Anspruch 4, dadurch gekennzeichnet, daß die Federanordnung erste, zwischen Gehäuse und Schienen wirkende sowie zweite, zwischen Schienen und Schieber wirkende Federn umfaßt.

13) Behälter nach Anspruch 4, dadurch gekennzeichnet, daß die Federanordnung Druckfedern umfaßt, die zwischen Gehäuse und Schieber wirkend eingespannt sind und die Schienen durchsetzen.

14) Behälter nach Anspruch 1, dadurch gekennzeichnet, daß die Verriegelungsanordnung formschlüssig ineinandergreifende Hakenelemente umfaßt, von denen je eines am Gehäuse und eines am Schieber angeordnet sind und die derart ausgebildet sind, daß sie sich bei Einschub des Schiebers in das Gehäuse selbsttätig verriegeln.

15) Behälter nach Anspruch 5, dadurch gekennzeichnet, daß der Schieber im eingeschobenen Zustand von einer Hilfsfeder in eine Verriegelungsposition verschwenkt ist, in der sich ein an ihn angeformtes Verriegelungsorgan formschlüssig am Gehäuse verriegelt, und manuell gegen die Kraft der Hilfsfeder durch Verschwenken in Gegenrichtung entriegelbar ist.

16) Behälter nach Anspruch 1, dadurch gekennzeichnet, daß die Verriegelungsanordnung einen quer zur Schieberausschubrichtung beweglichen Riegel umfaßt, der kulissengesteuert beim Einschieben des Schiebers in das Gehäuse in eine Position beweglich ist, in der er eine formschlüssige Verriegelung zwischen Schieber und Gehäuse herstellt, und bei Eindrücken des Schiebers in das Gehäuse, wenn dieser in Verriegelungsposition ist, in eine Freigabestellung bewegbar ist.

17) Behälter nach Anspruch 16, dadurch gekennzeichnet, daß der Riegel in einer Schieberrückwand abgestützt geführt ist und im Gehäuse eine Steuerkulisse angeordnet ist, die zugleich eine Verriegelungskante für den Riegel aufweist.

18) Behälter nach Anspruch 1, dadurch gekennzeichnet, daß alle Kassetten dicht gestapelt in dem Schieber unterbringbar sind.

19) Behälter nach Anspruch 18, dadurch gekennzeichnet, daß für je eine Kassette ein Aufnahmefach im Schieber vorgesehen ist.

20) Behälter nach Anspruch 19, dadurch gekennzeichnet, daß die Aufnahmefächer voneinander durch Trennwände mit den Kassetteneinsatz begünstigenden dachartigen Schrägen getrennt sind.

21) Behälter nach Anspruch 18, dadurch gekennzeichnet, daß der Schieber einen Kassettenaufnahmeschacht aufweist, in dem die Kassetten unter Federvorspannung rüttelsicher gegen einen Anschlag gehalten sind.

22) Behälter nach Anspruch 21, dadurch gekennzeichnet, daß der Anschlag von einer Schieberfrontplatte gebildet ist, die das Gehäuse bei eingeschobenem Schieber deckelartig verschließt.

23) Behälter nach Anspruch 18, gekennzeichnet durch eine Trichteranordnung zum Erleichtern des Einsetzens der einzelnen Kassetten.

24) Behälter nach Anspruch 21, dadurch gekennzeichnet, daß ein gegen den Anschlag von einer Feder vorgespanntes Spannorgan vorgesehen ist, das durch Schrägstellen mindestens einer Kassette gegen die Federvorspannung auslenkbar ist.

25) Behälter nach Anspruch 18, dadurch gekennzeichnet, daß einzelne Kassettenaufnahmefächer durch an den Schieber angeformte Seitenstege abgeteilt sind.

26) Behälter nach Anspruch 18, dadurch gekennzeichnet, daß einzelne Kassettenaufnahmefächer durch an den Schieber angelnekte Haltewinkel gebildet sind.

27) Behälter nach Anspruch 20, dadurch gekennzeichnet, daß die Trennwände hohl sind.

28) Behälter nach Anspruch 20, dadurch gekennzeichnet, daß der Schieber teleskopartig ausziehbar ist und die Trennwände harmonikaartig eingefaltet sind, wenn der Schieber in das Gehäuse eingeschoben ist.

29) Behälter nach Anspruch 1, gekennzeichnet durch eine allen im Schieber befindlichen Kassetten gemeinsam zugeordnete Bandwickelnaben-Arretiereinrichtung.

30) Behälter nach Anspruch 29, dadurch gekennzeichnet, daß die Arretiereinrichtung Dorne mit Sperrflächen umfaßt, die sich bei geschlossenem Behälter durch die ausgefluchtet liegenden Bandwickelnaben-öffnungen aller Kassetten erstrecken.

31) Behälter nach Anspruch 30, dadurch gekennzeichnet, daß die Dorne mit einer gemeinsamen Tragplatte in den Behälter als Baugruppe eingesetzt sind.

32)   Behälter nach Anspruch 30, dadurch gekennzeichnet, daß die freien Dornenden längsgeschlitzt sind und daß sie mindestens eine im geschlitzten Dornbereich längs einer steilen Schraubenlinie verlaufende Sperrfläche aufweisen.

33)   Behälter nach Anspruch 30, dadurch gekennzeichnet, daß die Dorne im Schieber geführt sind.

34)   Behälter nach Anspruch 33, dadurch gekennzeichnet, daß sich die Dorne durch Ausnehmungen in einzelne Kassettenaufnahmefächer abgrenzende Trennwände erstrecken.

35)   Behälter nach Anspruch 32, dadurch gekennzeichnet, daß das freie Ende der Dorne angespitzt ist.

36)   Behälter nach Anspruch 29, dadurch gekennzeichnet, daß die gemeinsame Arretiereinrichtung einen relativ zum Schieber beweglichen Riegel mit Arretierorgan für alle im Behälter unterbringbaren Kassetten umfaßt.

37)   Behälter nach Anspruch 36, dadurch gekennzeichnet, daß der Riegel durch Auflaufen auf im Gehäuse ausgebildet Anschläge umsteuerbar ist.

38)   Behälter nach Anspruch 29, dadurch gekennzeichnet, daß die gemeinsame Arretiereinrichtung einen zwangssteuerbaren Lenker umfaßt, an den für je ein Kassettenaufnahmefach Arretierorgane tragende Hebel angelenkt sind.

39)   Behälter nach Anspruch 28, dadurch gekennzeichnet, daß die Trennwände von einem einstückigen, faltbaren Bauteil gebildet sind.

40)   Behälter nach Anspruch 39, dadurch gekennzeichnet, daß das Bauteil Bandwickelnaben-Arretierfortsätze aufweist, die im gefalteten Zustand bei eingeschobenem Schieber durch Löcher der jeweils gegenüberliegenden Wandungsseite in die Bandwickelnaben ragen, bei gezogenem Schieber jedoch im Trennwand-Hohlraum liegen.

41)   Behälter nach Anspruch 1, gekennzeichnet durch ein einstückig gespritztes Kunststoffgehäuse.

42)   Behälter nach Anspruch 2, gekennzeichnet durch einen einstückig aus Kunststcff gespritzten Schieber.

43)   Behälter nach Anspruch 1, dadurch gekennzeichnet, daß er auf seiner Außenseite Formschlußelemente zum Verbinden mit weiteren identischen Behältern aufweist.

44)   Behälter nach Anspruch 1, gekennzeichnet durch eine zusätzliche Vorspannfederanordnung, die im Schieber befindliche Kassetten in Richtung quer zu ihren Bandwickelnabenachsen drückt.

45)   Behälter nach Anspruch 1, dadurch gekennzeichnet, daß der Schieber eine Frontwand mit abgerundeter Kontur aufweist, die bei eingeschobenem Schieber die ihr zugewandten Gehäusekanten abdeckt.

Fig.1

Fig.2

Fig.3

10

52

14

50

44

48

46

44

48

50

60

62

54

38

12

40

26

20

32

36

28

30

42

16

18

24

22

1/11

0113806

Fig.6

Fig.4

Fig.5

Fig.8

Fig.7

Fig.9

Fig.10

Fig.11

204

206

210

208

212

200

11

11

202

214

212

Fig.12

Fig.13

314

330

320

318

334

326
328
304

324

300 302 306

312 332
316
322

Fig.15

308

306

340
342
344

Fig.16

Fig.14

324

310

5/11 0113806

Fig.17

400

402

404

406

408

410

412

Fig.18

Fig.19

Fig.20

Fig. 21

Fig. 22

Fig. 23

Fig. 24

Fig. 26

Fig. 25

Fig. 27

Fig. 28

Fig. 29

Fig. 30

Fig. 31

Fig. 32

532 530 536 534 538 546 540 542 544

548 530

Fig. 33

Fig. 34

Fig. 35

Fig. 36

Fig. 37

Europäisches
Patentamt

**EUROPÄISCHER RECHERCHENBERICHT**

0113806

Nummer der Anmeldung

EP 83 10 8477

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-U-7 435 482 (G. ARENZ et al.) <br> * Seite 1, Zeile 20 - Seite 3, Zeile 21; Figuren * | 1,30 | G 11 B 23/02 |
| A | DE-B-2 427 105 (IDN) <br> * Anspruch 1; Figuren 1, 2 * | 1,30 | |
| A | DE-A-3 106 511 (R. EICKEL) <br> * Seite 12, Zeilen 3-17 * | 1,2 | |
| A | DE-B-1 797 278 (PHILIPS) <br> * Spalte 2, Zeile 25 - Spalte 3, Zeile 30; Figuren 1, 2 * | 14 | |
| A | US-A-4 180 299 (L.E. TOLERSON) <br> * Spalte 2, Zeile 39 - Spalte 3, Zeile 26; Figuren 1, 2 * | 1 | RECHERCHIERTE SACHGEBIETE (Int. Cl. ³) |
| A | DE-A-2 917 806 (P. FLORJANCIC) | | G 11 B 23/00 |

Der vorliegende Recherchenbericht wurde für alle Patentansprüche erstellt.

| Recherchenort <br> BERLIN | Abschlußdatum der Recherche <br> 07-03-1984 | Prüfer. <br> ROGNONI M.G.L. |
|---|---|---|